# FASCICULE DE BREVET EUROPEEN

(11) **EP 0 774 211 B1**
(45) Date de publication et mention de la délivrance du brevet: **31.01.2001**
(21) Numéro de dépôt: 96490043.5
(22) Date de dépôt: 15.11.1996
(51) Int. Cl.: A23L 3/36, A23B 7/152, A23L 1/216

(54) **Procédé de préparation et de conservation de pommes de terre à l'état cru et épluché et pommes de terre ainsi préparées et conservées**
Verfahren zur Bereitung und Konservierung von rohen geschälten Kartoffeln und den so hergestellten und konservierten Kartoffeln
Process for preparing and preserving peeled raw potatoes and potatoes so prepared and preserved

(30) Priorité: 17.11.1995 FR 9513888
(43) Date de publication de la demande: 21.05.1997
(73) Titulaire: Nature Frais, Sàrl, 80150 Gapennes (FR); L'AIR LIQUIDE, SOCIETE ANONYME POUR L'ETUDE ET L'EXPLOITATION DES PROCEDES GEORGES CLAUDE, 75007 Paris (FR)
(72) Inventeur: Mailly, Anne, 80150 Gapennes (FR)
(74) Mandataire: Michelet, Alain

(56) Documents cités:
- EP-A- 0 153 215
- EP-A- 0 280 248
- EP-A- 0 422 995
- EP-A- 0 554 468

## Description

L'invention se rapporte à un procédé de préparation de pommes de terre destinées à être temporairement conservées, à l'état cru et épluché, dans un emballage et sous une atmosphère déterminée confinée dans cet emballage, en vue d'être finalement cuisinées sans déstructuration notable et/ou altération de qualités gustatives.

L'invention concerne plus particulièrement mais non exclusivement un procédé de préparation de pommes de terre sans additif ni conservateur ou comprenant de très faibles doses de sulfite, d'acides citrique et ascorbique seuls ou en mélange dont la seule fonction est la prévention du brunissement enzymatique aprés ouverture des conditionnements, pommes de terre destinées à être temporairement conservées à l'état cru et épluché, dans un emballage et sous une atmosphère déterminée confinée dans cet emballage, en vue d'être finalement cuisinées sans déstructuration notable et/ou altération de qualités gustatives.

L'invention se rapporte également aux pommes de terre crues et épluchées ainsi préparées et conservées.

Dans le domaine de la conservation de produits végétaux frais à l'état cru, il est connu d'utiliser une atmosphère dite inerte FR-A-2.198.700.

Pour la conservation des produits végétaux crus et épluchés, voire coupés, on préfère mettre en oeuvre un mélange d'azote et de dioxyde de carbone FR-A-2.559.648, EP-A-0.280.248.

La mise en oeuvre d'atmosphères protectrices constituées de gaz neutres, de gaz inhibiteurs du brunissement enzymatique et/ou de la multiplication des microorganismes comme le gaz carbonique et le protoxyde d'azote seuls ou en mélange etc ..., qu'elles soient constituées de gaz neutres et/ou de mélanges de gaz neutres, permet de prolonger la conservation au froid de pommes de terre crues et épluchées, mais ne garantit pas que ces pommes de terre seront finalement aptes à être cuisinées sans destructuration et/ou perte de qualités gustatives.

Un résultat que l'invention vise à obtenir est un procédé qui permette de proposer à la vente des pommes de terres épluchées et crues, lesquelles seront finalement aptes à être cuisinées sans destructuration et/ou perte de qualités gustatives.

Un autre résultat que l'invention vise à obtenir est un procédé qui permette de proposer de telles pommes de terre entières, en lamelles, en dés voire en bâtonnets.

A cet effet, l'invention a pour objet un procédé de préparation de pommes de terre destinées à être temporairement conservées, à l'état cru et épluché, dans un emballage et sous une atmosphère déterminée, en vue d'être finalement cuisinées sans déstructuration notable et/ou altération de qualités gustatives, ce procédé étant notamment caractérisé en ce que :
- lors d'une étape préparatoire, on sélectionne des pommes de terre parmi au moins l'un des deux groupes que sont :
   . les pommes de terre à chair ferme et d'un taux de matière sèche compris entre 18 % et 20 % et,
   . les pommes de terre à chair tendre et d'un taux de matière sèche compris entre 21 % et 23 %,
- lors de l'étape d'épluchage des pommes de terre ainsi sélectionnées, on procède par découpe de matière superficiellement à chaque pomme de terre, c'est à dire au moins par microdécoupe mécanique de portions de la peau de ladite pomme de terre.

L'invention a également pour objet les pommes de terre crues et épluchées ainsi préparées et conservées.

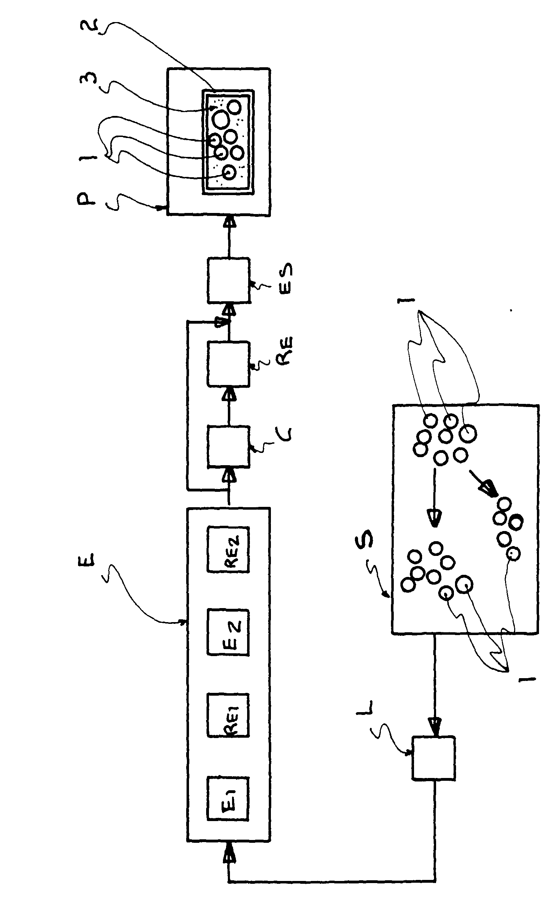

L'invention sera bien comprise à la lecture de la description ci-après faite, à titre d'exemple non limitatif en regard du dessin ci-annexé qui représente un schéma synoptique du procédé de l'invention.

L'invention concerne un procédé de préparation de pommes de terre en vue de leur présentation à la vente à l'état cru et épluché, dans au moins l'une des configurations que sont la configuration entière et la configuration divisée.

En se reportant au dessin, on voit qu'à cet effet, les pommes de terre 1, avant d'être placées P en vrac et sous une atmosphère 2 déterminée dans un emballage 3 en matériau étanche à l'air et particulièrement à l'oxygène, subissent classiquement un traitement comprenant plusieurs étapes, dont notamment une étape de lavage L et une étape d'épluchage E.

Le procédé de l'invention est remarquable en ce que :
- lors d'une étape préparatoire S, on sélectionne des pommes de terre 1 parmi au moins l'un des deux groupes que sont :
   . les pommes de terre à chair ferme et d'un taux de matière sèche compris entre 18 % et 20 % et,
   . les pommes de terre à chair tendre et d'un taux de matière sèche compris entre 21 % et 23 %,
- lors de l'étape E d'épluchage des pommes de terre 1 ainsi sélectionnées, on procède par découpe de matière superficiellement à chaque pomme de terre 1, c'est à dire au moins par microdécoupe mécanique de portions de la peau de ladite pomme de terre.

De manière notable, on sélectionne des pommes de terre ayant une faible sensibilité au brunissement enzymatique mesurée sur la matière première par une absence de rosissement visible aprés un temps déterminé.

De manière notable, on sélectionne des pommes de terre ayant une faible sensibilité au brunissement enzymatique mesurée sur la matière première par une absence de rosissement visible au moins vingt minutes aprés découpe.

De préférence, on procède à l'épluchage par découpe au moyen de couteaux rotatifs.

L'expression "à chair ferme" bien connue dans le domaine de l'industrie de la pomme de terre, est utilisée pour désigner des pommes de terre de caractéristiques génétiques déterminées.

De manière préférentielle mais non limitative, les pommes de terre à chair ferme sélectionnées sont des pommes de terre de la variété dite CHARLOTTE.

De manière également préférentielle mais non limitative, les pommes de terre à chair tendre sélectionnées sont des pommes de terre de la variété dite BINTJE.

La combinaison des deux étapes opératoires de sélection S et d'épluchage E par découpe est déterminante pour l'obtention du résultat visé par l'invention.

Précisément, outre le fait que les pommes de terre 1 ainsi sélectionnées sont particulièrement aptes à subir sans déstructuration une opération de cuisson, la texture de leur chair, leur taux matière sèche participe notablement à leur conservation et, le fait qu'elles soient épluchées au moins par microdécoupe permet d'influencer leur conservation.

La mise en oeuvre d'un épluchage thermique, c'est à dire d'un épluchage par détente de vapeur, ne permettrait pas, avec des pommes de terres satisfaisant par ailleurs aux critères de taux de matière sèche et de texture de chair, d'obtenir la durée de conservation obtenue lorsque les produits sont épluchés par découpe superficielle et l'aspect souhaité pour la vente.

La mise en oeuvre d'un épluchage chimique ne permettrait pas non plus l'obtention du résultat précité.

De manière notable, pour réaliser l'épluchage E, on procède en au moins deux phases successives dont :
- une première phase E1 au cours de laquelle, on procède à l'abrasion de la peau de chaque pomme de terre 1 et,
- une seconde phase E2 au cours de laquelle, nonobstant l'épluchage par abrasion, on procède à un surfaçage de chaque pomme de terre 1 par découpe de pellicules de chair.

La qualité de l'épluchage obtenu par cette succession de phases E1, E2 permet de garantir, certes un aspect avenant pour les produits, mais également et surtout une aptitude renforcée à la conservation de cet aspect dans le temps, du fait de la suppression des tissus meurtris lors de la phase d'épluchage par abrasion.

De manière notable, on effectue la découpe de pellicules de chair au moyen de couteaux.

C'est bien entendu après l'étape E d'épluchage que, s'il y a lieu, on coupe C les pommes de terre 1, par exemple en tranches, en dés voire en bâtonnets.

De manière remarquable, l'étape P de placement des pommes de terre 1, sous une atmosphère 2 déterminée dans un emballage 3 en matériau étanche à l'air, est précédée d'au moins une étape E, C au cours de laquelle on réalise le rinçage RE1, RE2, RE des pommes de terre 1 dans un bain apte à supprimer au moins une couche d'amidon qui serait superficiellement présente sur lesdites pommes de terre 1 épluchées.

De manière notable, on réalise le rinçage dans un bain apte à supprimer au moins une couche d'amidon, ainsi que les substances phénoliques et enzymes responsables du brunissement qui seraient superficiellement présentes sur les dites pommes de terre.

Le bain est par exemple, un bain d'eau additionnée ou non d'un agent bactéricide.

Cette suppression de l'amidon sur les produits permet de préserver l'aspect de l'emballage 3 lorsque celui-ci est transparent.

De manière également remarquable, la première phase E1 d'épluchage E est également suivie d'au moins une opération RE1 de rinçage des pommes de terre 1, en vue de la suppression de particules et fragments qui seraient retenus à leur surface.

De manière remarquable, avant de placer P les pommes de terre 1, dans un emballage en matériau étanche à l'air et particulièrement à l'oxygène, on élimine ES le liquide qui pourrait être retenu à leur surface, tel le liquide de rinçage.

Pour cela, on procède de préférence à un essorage ES.

De manière notable, lors de l'étape S de sélection, on retient les pommes de terre 1 dont le taux de matière sèche est de 19 % et, on écarte les autres pommes de terre du traitement selon le procédé.

Les produits ainsi obtenus seront particulièrement aptes à être cuisinés à la vapeur ou sautés.

De manière remarquable, lors de l'étape S de sélection, on retient les pommes de terre 1 dont le taux de matière sèche est de 22 % et on écarte les autres pommes de terre du traitement selon le procédé.

Les produits ainsi obtenus seront particulièrement aptes à être faits dans un bain de friture.

De manière remarquable, d'une part, au moins à l'issue de l'étape S de sélection des pommes de terre, on amène la température à coeur des pommes de terre sélectionnées à sensiblement 7 degrés et, d'autre part, entre l'étape S de sélection des pommes de terre et l'étape P de placement des pommes de terres dans un emballage, on abaisse progressivement la température à coeur des pommes de terre de 7 degrés celsius à sensiblement 4 degrés celsius (sept degrés celsius à sensiblement quatre degrés celsius).

De préférence, au moins à l'issue de l'étape de sélection, on met en oeuvre des pommes de terre 1 dont la température à coeur est de 4 degrés celsius (quatre degrés celsius).

De manière remarquable, au moins à l'issue du placement des pommes de terre 1 dans le réceptacle 3 et avant de fermer ce réceptacle, on évacue l'air contenu dans le volume libre et on injecte de l'argon dans le dit réceptacle.

L'invention se rapporte également au pommes de terre traitées selon le procédé qui vient d'être exposé.

Il faut noter que l'indication selon laquelle le taux de matière sèche des pommes de terre sélectionnées doit être compris entre 18 % et 20 % ou 21 % et 23 % n'exclut pas que ce taux puisse être égal à l'une des deux limites d'un des intervalles indiqués.

## Revendications

1. Procédé de préparation de pommes de terre (1) destinées à être temporairement conservées, à l'état cru et épluché, dans un emballage (3), sous une atmosphère (2) déterminée confinée dans cet emballage, en vue d'être finalement cuisinées sans déstructuration notable et/ou altération de qualités gustatives,
dans ce procédé, les pommes de terre (1), avant d'être placées (P) en vrac dans l'emballage (3) en matériau étanche à l'air et particulièrement à l'oxygène, subissent classiquement un traitement comprenant plusieurs étapes, dont notamment une étape de lavage (L) et une étape d'épluchage (E),
ce procédé étant **CARACTERISE** en ce que :
- lors d'une étape préparatoire (S), on sélectionne des pommes de terre (1) parmi au moins l'un des deux groupes que sont :
. les pommes de terre à chair ferme et d'un taux de matière sèche compris entre 18 % et 20 % et,
. les pommes de terre à chair tendre et d'un taux de matière sèche compris entre 21 % et 23 %,
- lors de l'étape (E) d'épluchage des pommes de terre (1) ainsi sélectionnées, on procède par découpe de matière superficiellement à chaque pomme de terre (1), c'est à dire au moins par microdécoupe mécanique de portions de la peau de ladite pomme de terre.

2. Procédé selon la revendication 1 **caractérisé** en ce que, pour réaliser l'épluchage (E), on procède en au moins deux phases successives dont :
- une première phase (E1) au cours de laquelle, on procède à l'abrasion de la peau de chaque pomme de terre (1) et,
- une seconde phase (E2) au cours de laquelle, nonobstant l'épluchage par abrasion, on procède à un surfaçage de chaque pomme de terre (1) par découpe de pellicules de chair.

3. Procédé selon la revendication 1 ou 2 **caractérisé** en ce que l'étape (P) de placement des pommes de terre (1), sous une atmosphère (2) déterminée dans un emballage (3) en matériau étanche à l'air, est précédée d'au moins une étape, sélectionnée parmi l'étape d'épluchage (E) et l'étape suivante optionnelle (C) lors de laquelle les pommes de terre sont découpées, au cours de laquelle on réalise le rinçage (RE1, RE2, RE) des pommes de terre (1) dans un bain apte à supprimer au moins une couche d'amidon qui serait superficiellement présente sur lesdites pommes de terre (1) épluchées.

4. Procédé selon l'une quelconque des revendications 1 à 3 **caractérisé** en ce que, avant de placer (P) les pommes de terre (1), dans un emballage en matériau étanche à l'air et particulièrement à l'oxygène, on élimine (ES) le liquide qui pourrait être retenu à leur surface, tel le liquide de rinçage.

5. Procédé selon l'une quelconque des revendications 1 à 4 **caractérisé** en ce que, lors de l'étape (S) de sélection, on retient les pommes de terre (1) dont le taux de matière sèche est de 19 % et on écarte les autres pommes de terre du traitement selon le procédé.

6. Procédé selon l'une quelconque des revendications 1 à 4 **caractérisé** en ce que, lors de l'étape (S) de sélection, on retient les pommes de terre (1) dont le taux de matière sèche est de 22 % et on écarte les autres pommes de terre du traitement selon le procédé.

7. Procédé selon l'une quelconque des revendications 1 à 6 **caractérisé** en ce que, d'une part, au moins à l'issue de l'étape (S) de sélection des pommes de terre, on amène la température à coeur des pommes de terre sélectionnées à sensiblement 7 degrés celsius (sept degrés celsius) et, d'autre part, entre l'étape (S) de sélection des pommes de terre et l'étape (P) de placement des pommes de terres dans un emballage, on abaisse progressivement la température à coeur des pommes de terre de 7 degrés celsius à sensiblement 4 degrés celsius (sept degrés celsius à sensiblement 4 degrés celsius).

8. Procédé selon l'une quelconque des revendications 2 à 7 **caractérisé** en ce qu'on effectue la découpe de pellicules de chair au moyen de couteaux.

9. Procédé selon l'une quelconque des revendications 1 à 8 **caractérisé** en ce que, au moins à l'issue du placement des pommes de terre (1) dans le réceptacle (3) et avant de fermer ce réceptacle, on évacue l'air contenu dans le volume libre et on injecte de l'argon dans le dit réceptacle.

10. Pommes de terre préparées selon le procédé objet de l'une quelconque des revendications 1 à 9.

## Patentansprüche

1. Verfahren zur Vorbereitung von Kartoffeln (1), die dazu bestimmt sind, vorübergehend im rohen und geschälten Zustand in einer Verpackung (3) unter einer bestimmten, in dieser Verpackung eingeschlossenen Atmosphäre (2) konserviert zu werden, um schließlich ohne merklichen Strukturverlust und/oder Änderung der Geschmacksmerkmale gekocht zu werden,
wobei bei diesem Verfahren die Kartoffeln (1), bevor sie lose in die Verpackung (3) aus einem luft- und insbesondere sauerstoffdichten Material eingelegt (P) werden, herkömmlicherweise einer Behandlung unterzogen werden, die mehrere Schritte umfaßt, darunter insbesondere einen Schritt des Waschens (L) und einen Schritt des Schälens (E),
wobei dieses Verfahren dadurch gekennzeichnet ist, dass
- bei einem Vorbereitungsschritt (S) Kartoffeln (1) von mindestens einer der beiden Gruppen ausgewählt werden, nämlich:
- den festkochenden Kartoffeln mit einem Trockenmaterialanteil zwischen 18 % und 20 % und
- den weichkochenden Kartoffeln mit einem Trockenmaterialanteil zwischen 21 % und 23 %, und dass
- bei dem Schälschritt (E) der auf diese Weise ausgewählten Kartoffeln (1) an der Oberfläche jeder Kartoffel (1) Material abgeschnitten wird, d.h. zumindest durch mechanisches Mikroschneiden Teile der Haut der Kartoffel abgeschnitten werden.

2. Verfahren nach Anspruch 1, dadurch gekennzeichnet, dass für die Durchführung des Schälens (E) zumindest zwei aufeinanderfolgende Phasen vorgenommen werden, nämlich:
- eine erste Phase (E1), bei der die Haut jeder Kartoffel (1) abgerieben wird, und
- eine zweite Phase (E2), bei der ungeachtet des Schälens durch Abreiben eine Oberflächenbehandlung jeder Kartoffel (1) durch Abschneiden von Fleischhäutchen vorgenommen wird.

3. Verfahren nach Anspruch 1 oder 2, dadurch gekennzeichnet, dass vor dem Schritt (P) des Einlegens der Kartoffeln (1) in eine durch eine Verpackung (3) aus einem luftdichten Material bestimmte Atmosphäre (2) mindestens ein Schritt erfolgt, der aus dem Schritt des Schälens (E) und dem folgenden wahlweisen Schritt (C), bei dem die Kartoffeln geschnitten werden, ausgewählt wird und während dessen das Spülen (RE1, RE2, RE) der Kartoffeln (1) in einem Bad durchgeführt wird, das zumindest eine Stärkeschicht beseitigen kann, die an der Oberfläche der geschälten Kartoffeln (1) vorhanden wäre.

4. Verfahren nach einem der Ansprüche 1 bis 3, dadurch gekennzeichnet, dass vor dem Einlegen (P) der Kartoffeln (1) in eine Verpackung aus einem luft- und insbesondere sauerstoffdichten Material die Flüssigkeit beseitigt (ES) wird, die an ihrer Oberfläche verblieben sein könnte, wie beispielsweise die Spülflüssigkeit.

5. Verfahren nach einem der Ansprüche 1 bis 4, dadurch gekennzeichnet, dass beim Schritt (S) des Auswählens die Kartoffeln (1) gewählt werden, deren Trockenmaterialanteil 19 % beträgt, und die anderen Kartoffeln von der Behandlung nach dem Verfahren ausgeschlossen werden.

6. Verfahren nach einem der Ansprüche 1 bis 4, dadurch gekennzeichnet, dass beim Schritt (S) des Auswählens die Kartoffeln (1) gewählt werden, deren Trockenmaterialanteil 22 % beträgt, und die anderen Kartoffel von der Behandlung nach dem Verfahren ausgeschlossen werden.

7. Verfahren nach einem der Ansprüche 1 bis 6, dadurch gekennzeichnet, dass einerseits zumindest nach dem Schritt (S) des Auswählens der Kartoffeln die Temperatur im Zentrum der ausgewählten Kartoffeln auf im wesentlichen 7 Grad Celsius (sieben Grad Celsius) gebracht wird, und dass andererseits zwischen dem Schritt (S) des Auswählens der Kartoffeln und dem Schritt (P) des Einlegens der Kartoffeln in eine Verpackung nach und nach die Temperatur im Zentrum der Kartoffeln von 7 Grad Celsius auf im wesentlichen 4 Grad Celsius (sieben Grad Celsius auf im wesentlichen vier Grad Celsius) abgesenkt wird.

8. Verfahren nach einem der Ansprüche 2 bis 7, dadurch gekennzeichnet, dass das Abschneiden der Fleischhäutchen mit Hilfe von Messern erfolgt.

9. Verfahren nach einem der Ansprüche 1 bis 8, dadurch gekennzeichnet, dass zumindest nach dem Einlegen der Kartoffeln (1) in den Behälter (3) und vor dem Schließen dieses Behälters die in dem freien Volumen enthaltene Luft evakuiert und Argon in den Behälter eingespritzt wird.

10. Kartoffeln, die nach dem Verfahren vorbereitet wurden, das Gegenstand eines der Ansprüche 1 bis 9 ist.

## Claims

1. A process for preparing potatoes (1) intended for being preserved temporarily, raw and peeled, in a package (3) under a determined confined atmosphere (2) in this package, with a view to being finally cooked without any notable destructuration and/or alteration of the taste qualities,
in such a process, the potatoes (1), before being put (P) in bulk in the package (3) made of an air-tight material and in particular an oxygen-tight material, undergo conventionally a treatment consisting of several steps, among which a washing step (L) and a peeling step (E),
this process being characterised in that:
- during a preparatory step (S), potatoes (1) are selected among at least one of two groups, i.e.:
- firm flesh potatoes with a dry matter content ranging from 18 to 20% and,
- soft flesh potatoes with a dry matter content ranging from 21 to 23%,
- during the peeling step (E) of the potatoes (1) thus selected, each potato (1) is cut superficially, i.e. at least by mechanical microcutting of portions of the skin of the said potato.

2. A process according to claim 1, characterised in that, to perform the peeling step (E), at least two successive steps are followed:
- a first step (E1) during which the skin of each potato (1) is abraded and,
- a second step (E2) during which, notwithstanding abrasion peeling, each potato (1) is surface refined by cutting flesh films.

3. A process according to claim 1 or 2, characterised in that the step (P) consisting in putting the potatoes (1), under a determined atmosphere (2) into a package (3) made of air-tight material, is preceded by at least one step, selected among the peeling step (E) and the following optional step (C) during which the potatoes are cut, during which the potatoes (1) are rinsed (RE1, RE2, RE) in a bath capable of eliminating at least one layer of starch which might superficially present on the said peeled potatoes (1).

4. A process according to any one of claims 1 to 3, characterised in that, before putting (P) the potatoes (1) into a package made of an air-tight material and in particular oxygen-tight material, the liquid that might have been retained at their surface is thereby eliminated (ES), for instance the rinsing liquid.

5. A process according to any one of claims 1 to 4, characterised in that, during the selection step (S), the potatoes (1) whose dry matter content is 19% are retained, whereas the other potatoes of the treatment according to the process are rejected.

6. A process according to any one of claims 1 to 4, characterised in that, during the selection step (S), the potatoes (1) whose dry matter content is 22% are retained, whereas the other potatoes of the treatment according to the process are rejected.

7. A process according to any one of claims 1 to 6, characterised in that, on the one hand, at least upon completion of the potato selection step (S), the core temperature of the selected potatoes is brought to approximately 7° Celsius (seven degree Celsius) and, on the other hand, between the selection step (S) of the potatoes and the step (P) consisting in putting the potatoes into a package, the core temperature of the potatoes is gradually lowered from 7 degree Celsius to substantially 4 degree Celsius (from seven degree Celsius to substantially four degree Celsius).

8. A process according to any one of claims 2 to 7, characterised in that flesh films are cut using knives.

9. A process according to any one of claims 1 to 8, characterised in that, at least after putting the potatoes (1) into the receptacle (3) and before closing the said receptacle, the air contained in the free space is expelled and argon is injected into the said receptacle.

10. Potatoes prepared according to the process according to any one of claims 1 to 9.
